# EUROPÄISCHE PATENTSCHRIFT

(11) **EP 2 072 842 B1**
(45) Veröffentlichungstag und Bekanntmachung des Hinweises auf die Patenterteilung: **02.05.2012**
(21) Anmeldenummer: 08171162.4
(22) Anmeldetag: 10.12.2008
(51) Int. Cl.: F16B 37/08

(54) **Mutter für Verschraubungen, nämlich segmentierte Muttern**
Nut, especially comprising two halves
Ecrou en particulier composé d'un corps formé de deux moitiés

(30) Priorität: 22.12.2007 DE 102007062615
(43) Veröffentlichungstag der Anmeldung: 24.06.2009
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen & Partner

(56) Entgegenhaltungen:
- EP-A1- 1 870 538
- GB-A- 2 349 678
- US-A- 3 201 156
- US-A- 4 256 197

## Beschreibung

Die Erfindung betrifft eine Mutter für Verschraubungen, die sich in Umfangsrichtung aus im Wesentlichen gleichgroßen, in Trennebenen aneinander stoßenden und zwischen einer Öffnungs- und einer Schließstellung beweglich zueinander geführten Segmenten zusammensetzt, wobei die Segmente zueinander schwenkbar und hierzu in einem ersten Endbereich schwenkbeweglich miteinander verbunden sind.

Segmentierte Muttern für den Einsatz auf Schrauben oder Gewindebolzen sind aus dem Stand der Technik bekannt. So beschreibt die PCT WO2005/123345 A1 in den Fign. 9C - 9F eine in Umfangsrichtung aus drei gleichartigen Segmenten zusammengesetzte Mutter. Die Segmente sind nach Art von Backen gestaltet, die sich durch Betätigung eines um die Mittelachse der Mutter drehbaren Drehrings zwischen einer Öffnungsstellung und einer Schließstellung betätigen lassen, wobei die Backen eine radiale Bewegung ausführen. In der Schließstellung greifen innen an den Segmenten ausgebildete Innengewindeabschnitte in das entsprechende Außengewinde eines Gewindebolzens ein. In der Öffnungsstellung sind die an den Segmenten ausgebildeten Innengewindeabschnitte ohne Eingriff in das Außengewinde. Die segmentierte Mutter nach der PCT WO 2005/123345 A1 ist im Hinblick auf die spezielle Anwendung in einer Gewindebolzen-Spanneinrichtung ausgelegt und konstruiert. Die GB 2 349 678 A beschreibt eine aus zwei gleichartigen Segmenten zusammengesetzte Mutter mit einem Riegel als Schießvorrichtung und einer zusätzlichen stabilisierenden Überstülpmutter zum vollständigen Verschließen der Segmente. Für viele andere Anwendungen auf dem Gebiet des Anlagen- und Apparatebaus hingegen ist diese segmentierte Mutter weniger geeignet, insbesondere wegen des für viele bauliche Situationen der Praxis ungeeigneten Antriebs über einen koaxial zur Mutter angeordneten Drehring.

Der Erfindung liegt die **Aufgabe** zugrunde, eine für vielfältige Anwendungen im Anlagen- und Apparatebau geeignete, segmentierte Mutter zu schaffen.

Zur **Lösung** werden bei einer Mutter mit den eingangs angegebenen Merkmalen Schließmittel zum Gegeneinanderfahren der Segmente in ihre Schließstellung vorgeschlagen, wobei die Schließmittel als Drei-Punkt-Hebelmechanismus, welcher in der Schließstellung der Segmente in Übertotpunktlage gesichert ist, ausgestaltet sind.

Der Vorteil dieser Lösung besteht darin, dass die Segmente bzw. Backen zum Öffnen und Schließen nicht radial verfahren werden mit der Folge, dass keine Antriebe an mehreren Orten über den Umfang der Mutter verteilt erforderlich sind, sondern dass sich die Mutter in einem Winkel aufstellen lässt. Infolge dieses Aufschwenkens ist es möglich, die Schließmittel zum Gegeneinanderfahren der Segmente an einem einzigen Ort, bezogen auf den Umfang der Mutter, anzuordnen. Dies führt in der Praxis zu erweiterten Einsatzmöglichkeiten einer derartig segmentierten Mutter. Ein Beispiel aus der Praxis sind z. B. Flanschverschraubungen an Gehäusen oder Fundamenten von Windkraftanlagen. Die dort verwendeten Befestigungsflansche sind über ihren Umfang mit dicht aufeinander folgenden Verschraubungen versehen, so dass zwischen den einzelnen Verschraubungen, aber auch nach innen zu dem Gehäuse oder Fundament hin, nur sehr wenig Platz ist. Lediglich nach außen hin liegt die Verschraubung frei, und bietet daher dort genügend Platz für eine manuelle Betätigung des Schließmechanismus mittels eines Schließhebels.

Vorteilhafte Ausgestaltungen der erfindungsgemäßen Mutter sind in den Unteransprüchen angegeben.

Ausführungsbeispiele der Erfindung werden im Folgenden unter Bezugnahme auf die Zeichnungen beschrieben. Darin zeigen:
- Fig.1: in perspektivischer Darstellung eine aus zwei Segmenten aufgebaute Mutter, wobei diese im Schließzustand dargestellt ist;
- Fig. 2: die Mutter nach Fig. 1 in geöffneter Stellung;
- Fig. 3: eine vereinfachte Draufsicht auf die geschlossene Mutter und
- Fig. 4: ein Anwendungsbeispiel für eine efindungsgemäße Mutter.

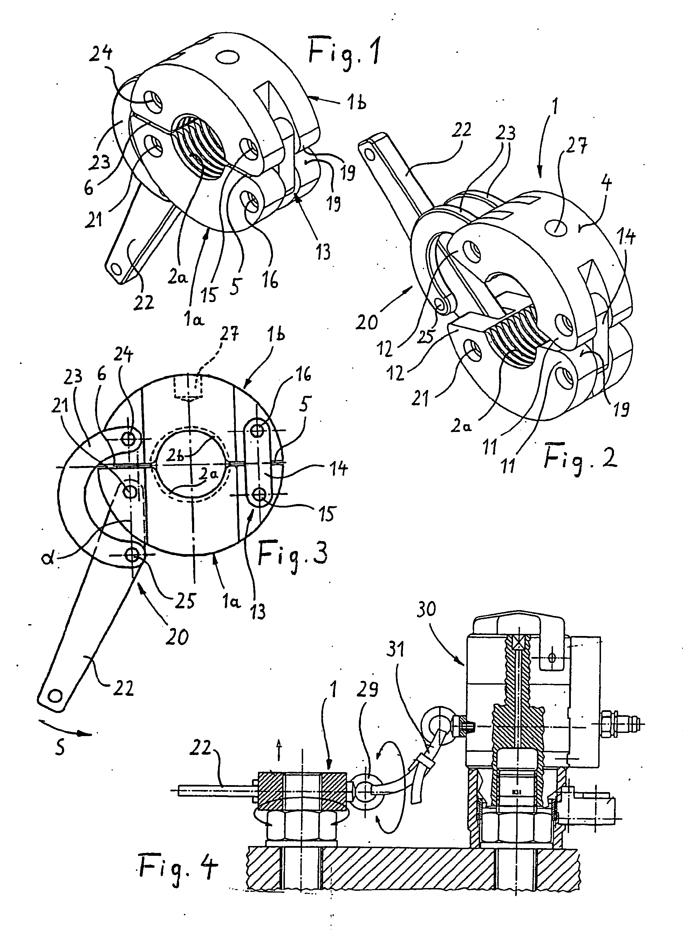

Die auf der Zeichnung dargestellte Mutter 1 besteht aus zwei zueinander verschwenkbaren Backen bzw. Segmenten 1 a, 1b. Ein Öffnen der Segmente 1 a, 1b, wie in Fig. 2 dargestellt, bewirkt ein Öffnen auch der daran jeweils ausgebildeten Innengewindesegmente 2a, 2b, wodurch sich diese Mutter über einen Gewindebolzen oder eine Schraube in axialer Richtung bis zum gewünschten Längsort bewegen lässt, ohne dass ein mühsames Aufschrauben entlang der Gewindelänge des Gewindebolzens oder der Schraube erforderlich wäre. Auch auf langen Gewindebolzen lässt sich diese Mutter daher sehr schnell am gewünschten Längsort platzieren und dann durch Schließen der Backen festlegen.

Dabei sind grundsätzlich zwei verschiedene Ausführungen möglich: Bei einer ersten Ausführungsform ergänzen sich die beiden Innengewindesegmente 2a, 2b bei geschlossener Mutter 1 zu einem vollständigen Norminnengewinde. Eine solche Mutter lässt sich daher in ihrer Schließstellung wie jede andere Schraubenmutter verschrauben.

Bei einer zweiten Ausführungsform ergänzen sich die beiden Innengewindesegmente 2a, 2b in der Schließstellung der Mutter 1 zu einem Klemmgewinde, dessen Gewindeflanken an den korrespondierenden Gewindeflanken des Gewindebolzens oder der Schraube reibschlüssig festklemmen. Eine solche Mutter lässt sich in ihrer Schließstellung nicht oder nur unter Anwendung eines hohen Drehmomentes auf dem korrespondierenden Außengewinde verdrehen.

Der Grundaufbau der erfindungsgemäßen Mutter ist im Übrigen bei beiden Ausführungsformen derselbe. Die beiden Segmente 1 a, 1b, welche gleich groß und vorzugsweise identisch gestaltet sind, sind zueinander im Winkel aufschwenkbar, und hierzu in einem ersten Endbereich 11 schwenkbeweglich miteinander verbunden. Das Öffnen der Mutter erfolgt hingegen in einem zweiten Endbereich 12, welcher zu diesem Zweck mit im Folgenden noch erläuterten Schließmitteln versehen sind.

Die beiden Segmente 1 a, 1b haben halbschalenförmige Außenflächen 4 und stoßen in der Schließstellung der Mutter an Trennebenen 5, 6 aneinander. Zur Realisierung eines Schwenkgelenks 13 erstreckt sich über die Trennebene 5 des ersten Endbereichs 11 hinweg ein Gelenkzwischenstück 14. Das Gelenkzwischenstück 14 ist über einen ersten Bolzen 15 in dem ersten Segment 1 a, und über einen zweiten Bolzen 16 in dem anderen Segment 1b gelagert. Daher ist das Schwenkgelenk 13 als Doppelgelenk ausgebildet, was zum einen ein weites Öffnen der Gewindesegmente 2a, 2b bei zugleich symmetrischer Schließung ermöglicht, und zum anderen die Verwendung zweier identisch gestalteter Segmente 1 a, 1b ermöglicht, was produktionstechnische Vorteile hat.

Im radial äußeren Bereich der Trennebene 5 entfernen sich die Außenflächen der Segmente 1a, 1b unter Ausbildung von Radien 19 voneinander. Dies ermöglicht ein weites Öffnen der beiden Backen, ohne dass es im Bereich der Trennebene zu einem Klemmen kommt. Vorzugsweise sind die beiden Radien 19 auf die Mittelachse des ersten Bolzens 15 und des zweiten Bolzens 16 bezogen.

Die in dem zweiten Endbereich 12 und damit im Bereich der zweiten Trennebene 6 angeordneten Schließmittel bestehen aus einem Hebelmechanismus 20 mit einem auf einer Schwenkachse 21 in dem einen Segment 1 a schwenkbeweglich gelagerten Schließhebel 22, sowie aus einem weiteren Hebel 23, welcher bei dem hier beschriebenen Ausführungsbeispiel die Gestalt eines nach radial außen gewölbten Bogens aufweist. Der Hebel 23 ist am Gelenk 25 mit dem Schließhebel 22 verbunden, wohingegen das andere Ende des Hebels 23 auf einer Achse 24 drehgelagert ist, welche Achse 24 sich in dem Segment 1b befindet. Als Folge dieser Hebelkonstruktion führt eine Bewegung des Schließhebels 22 in Schließrichtung S zu einem gegenseitigen Verschließen der Segmente, bis diese in der Trennebene 6 aneinander stoßen. In der Schließstellung nehmen die Elemente des Hebelmechanismus 20 eine Übertotpunktlage ein, wodurch der 3-Punkt-Hebelmechanismus in der Schließstellung gegen ein selbsttätiges Lösen gesichert ist. Die sich aus den Drehpunkten 24, 21 und 25 ergebende Totpunktlage ist in Fig. 3 mit dem Winkel α bezeichnet. Durch den im Wesentlichen nach radial außen abstehenden Hebelarm des Schließhebels 22 und dessen Lagerung auf der Schwenkachse 21 in dem Segment 1a lässt sich eine hohe Schließ- bzw. Klemmkraft der Mutter erzielen. Von Vorteil ist, dass sich die Betätigungselemente des Hebelmechanismus 22 auf einen Umfangsabschnitt der Mutter beschränken, nämlich den Schwenkbereich des Hebels 22, wodurch auch an räumlich beengten Stellen eine Festlegung der Mutter möglich ist.

In der Außenfläche 4 der Segmente 1a, 1b mündet jeweils ein Gewinde 27, welches der festen Verankerung eines Befestigungselementes 29 dient. Das Befestigungselement 29 kann z. B. eine in das Gewinde 27 einschraubbare Ringöse sein, (vgl. Fig. 4). Vorzugsweise sind beide Backen 1 a, 1b mit derartigen Gewinden 27 versehen, so dass sich das Befestigungselement 29 wahlweise in die andere oder in die andere Backe einschrauben lässt.

In Fig. 4 ist ein Anwendungsbeispiel unter Verwendung der beschriebenen Mutter 1 dargestellt. Diese ist in der Nähe eines hydraulischen Schraubenspannzylinders 30, dessen Wegfliegen bei seiner Betätigung verhindert werden soll, auf dem nächstgelegenen Gewinde befestigt. Ein an dem Befestigungselement 29 befestigter Gurt dient als Sicherheitsgurt 31. Für die ausreichende Festlegung dieses Sicherheitsgurtes ist es daher nicht erforderlich, die Mutter 1 zunächst unter vielen Umdrehungen auf das benachbarte Außengewinde aufzuschrauben. Vielmehr wird die Mutter lediglich geöffnet, in geöffnetem Zustand in Längsrichtung auf das vorhandene Gewinde geschoben, und dann geschlossen. Dies lässt sich in wenigen Sekunden bewerkstelligen.

### Bezugszeichenliste

- 1: Mutter
- 1 a: Segment
- 1 b: Segment
- 2a: Innengewindesegment
- 2b: Innengewindesegment
- 4: Außenfläche
- 5: Trennebene
- 6: Trennebene
- 11: erster Endbereich
- 12: zweiter Endbereich
- 13: Schwenkgelenk, Doppelgelenk
- 14: Gelenkzwischenstück
- 15: erster Bolzen
- 16: zweiter Bolzen
- 19: Radius
- 20: Hebelmechanismus, Schließmittel
- 21: Schwenkachse
- 22: Schließhebel
- 23: Hebel
- 24: Achse
- 25: Gelenk
- 27: Gewinde
- 29: Befestigungselement
- 30: Schraubenspannzylinder
- 31: Gurt

- S: Schließrichtung
- α: Winkel

## Patentansprüche

1. Mutter für Verschraubungen, die sich in Umfangsrichtung aus im Wesentlichen gleichgroßen, in Trennebenen (5, 6) aneinander stoßenden und zwischen einer Öffnungs- und einer Schließstellung beweglich zueinander geführten Segmenten (1 a, 1 b) zusammensetzt, wobei die Segmente (1 a, 1 b) zueinander schwenkbar und hierzu in einem ersten Endbereich (11) schwenkbeweglich miteinander verbunden sind, **gekennzeichnet durch** Schließmittel (20) zum Gegeneinanderfahren der Segmente (1a, 1b) in ihre Schließstellung, wobei die Schließmittel (20) als Drei-Punkt-Hebelmechanismus, welcher in der Schließstellung der Segmente (1a, 1b) in Übertotpunktlage gesichert ist, ausgestaltet sind.

2. Mutter nach Anspruch 1, **dadurch gekennzeichnet, dass** das Schwenkgelenk ein Doppelgelenk (13) mit einem sich quer zu der Trennebene (5) erstreckenden Gelenkzwischenstück (14) ist.

3. Mutter nach Anspruch 1 oder 2, **dadurch gekennzeichnet, dass** der Drei-Punkt-Hebelmechanismus (20) die Segmente (1a, 1b) in ihren zweiten Endbereichen (12) beaufschlagt.

4. Mutter nach einem der vorangehenden Ansprüche, **gekennzeichnet durch** einen in einem der Segmente (1a, 1b) auf einer Schwenkachse (21) gelagerten Schließhebel (22) zur Betätigung des Hebelmechanismus, wobei sich der Schließhebel (22) über die Außenfläche (4) der Mutter hinaus nach außen erstreckt.

5. Mutter nach einem der vorangehenden Ansprüche, **gekennzeichnet durch** ein starr an zumindest einem der Segmente (1a, 1b) ausgebildetes Befestigungselement (29) zum Anbringen eines Sicherungsmittels, vorzugsweise eines Sicherungsgurtes.

## Claims

1. A nut for screw fastenings, which is formed in the peripheral direction from segments (1a, 1b) of substantially equal size abutting against one another in separation planes (5, 6) and guided in a movable manner with respect to one another between an opening and a closure position, wherein the segments (1a, 1b) are pivotable with respect to one another and to this end are connected to one another in a pivotably movable manner in a first end region (11), **characterized by** closure means (20) for moving the segments (1a, 1b) towards one another into their closure position, wherein the closure means (20) are designed in the form of a three-point lever mechanism which is secured in a top dead centre position in the closure position of the segments (1a, 1b).

2. A nut according to Claim 1, **characterized in that** the pivot joint is a double joint (13) with an intermediate joint member (14) extending transversely to the separation plane (5).

3. A nut according to Claim 1 or 2, **characterized in that** the three-point lever mechanism (20) acts upon the segments (1a, 1b) in their second end regions (12).

4. A nut according to any one of the preceding Claims, **characterized by** a closure lever (22) mounted on a pivot axis (21) in one of the segments (1a, 1b) in order to actuate the lever mechanism, wherein the closure lever (22) extends outwards beyond the outer face (4) of the nut.

5. A nut according to any one of the preceding Claims, **characterized by** a fastening element (29) formed rigidly on at least one of the segments (1a, 1b) in order to apply a safety means, preferably a safety belt.

## Revendications

1. Ecrou pour des assemblages vissés qui se composent dans le sens périphérique de segments (1a, 1b) de tailles sensiblement identiques, se touchant dans des plans de séparation (5, 6) et guidés de façon mobile les uns par rapport aux autres entre une position d'ouverture et une position de fermeture, les segments (1a, 1b) pouvant basculer les uns par rapport aux autres et étant reliés les uns aux autres à cet effet dans une première zone d'extrémité (11) de façon mobile et basculante, **caractérisé par** des moyens de fermeture (20) pour le déplacement les uns par rapport aux autres des segments (1a, 1b) dans leur position de fermeture, les moyens de fermeture (20) étant conçus sous forme de mécanisme à levier à trois points, qui est bloqué dans la position de fermeture des segments (1a, 1b) dans la position du point mort haut.

2. Ecrou selon la revendication 1, **caractérisé en ce que** l'articulation basculante est une double articulation (13) avec une pièce intermédiaire articulée (14) s'étendant transversalement au plan de séparation (5).

3. Ecrou selon la revendication 1 ou 2, **caractérisé en ce que** le mécanisme de levier à trois points (20) sollicite les segments (1a, 1b) dans leurs secondes zones d'extrémité (12).

4. Ecrou selon l'une des revendications précédentes, **caractérisé par** un levier de fermeture (22) monté dans l'un des segments (1a, 1b) sur un axe de pivotement (21) pour l'actionnement du mécanisme à levier, le levier de fermeture (22) s'étendant au-delà de la surface extérieure (4) de l'écrou vers l'extérieur.

5. Ecrou selon l'une des revendications précédentes, **caractérisé par** un élément de fixation (29) conçu de façon rigide sur au moins l'un des segments (1a, 1b) pour le placement d'un moyen de blocage, de préférence une sangle de blocage.
